# EUROPEAN PATENT APPLICATION

(11) **EP 4 436 060 A1**
(43) Date of publication of application: **25.09.2024**
(21) Application number: 24164930.0
(22) Date of filing: 20.03.2024
(51) Int. Cl.: H04B 7/08, H04B 7/185

(54) **ELECTRONIC DEVICE AND OPERATING METHOD THEREOF IN NON-TERRESTRIAL NETWORK-BASED COMMUNICATION SYSTEM**

(30) Priority: 21.03.2023 KR 20230036886; 07.09.2023 KR 20230119272
(71) Applicant: Samsung Electronics Co., Ltd., Suwon-si, Gyeonggi-do 16677 (KR)
(72) Inventor: CHONG, Dahae, 16677 Suwon-si (KR); KIM, Beomkon, 16677 Suwon-si (KR); DO, Joohyun, 16677 Suwon-si (KR)
(74) Representative: Marks & Clerk LLP

(57) **Abstract**

Provided is an electronic device and an operating method thereof in a non-terrestrial network-based communication system, the operating method including setting a counter to an initial value; acquiring a serving metric for reception quality of a serving antenna and a candidate metric corresponding to a candidate antenna for a measurement period; comparing a magnitude of the candidate metric with a magnitude of a sum of the serving metric and an offset; determining whether the counter is equal to a predetermined threshold when the magnitude of the candidate metric is greater than the magnitude of the sum of the serving metric and the offset; and selecting an antenna from among the serving antenna and the candidate antenna in response to the counter and the threshold being equal to each other.

## Description

### TECHNICAL FIELD

The inventive concept provides a method for selecting an antenna, and more particularly, provides an electronic device and operating method thereof in a non-terrestrial network-based communication system.

### BACKGROUND

Wireless communication systems, particularly in non-terrestrial networks, demand efficient and adaptive mechanisms for antenna selection. Traditional methods often lack the capability to dynamically optimize antenna usage based on real-time conditions, leading to suboptimal performance and reduced reliability in terms of coverage. Selection of an appropriate antenna configuration is pivotal due to the dynamic nature of connectivity, varying signal strengths, and the inherent challenges posed by an environment.

In some cases, when an optimal antenna is selected by the user terminal, the user terminal may connect a signal received by the selected antenna to an input of the satellite communication system and perform data communication. However, the signal quality of each of the antennas may reduce or vary over time resulting in degradation of reception performance. Therefore, there is a need in the art for adaptive algorithms and real-time data analysis that can dynamically identify and utilize the optimal antenna configuration for seamless and reliable connectivity.

### SUMMARY

The inventive concept provides an electronic device and an operating method thereof in a non-terrestrial network-based communication system. One or more embodiments of the present disclosure include a communication system configured to perform quality measurement of a plurality of candidate antennas while maintaining reception performance of a serving antenna. According to an embodiment, a candidate antenna of the plurality of candidate antennas may be changed to a serving antenna while accommodating a limited number of antennas. In some cases, embodiments may include algorithms and data analysis to dynamically identify and utilize the optimal antenna configuration. Therefore, in addition to selecting a serving antenna, embodiments may reselect antennas based on continuous monitoring of the signal quality of each of the plurality of candidate antennas.

According to an aspect of the inventive concept, there is provided an operating method of an electronic device having a plurality of antennas in a non-terrestrial network (NTN)-based communication system, the operating method includes setting a counter to an initial value, acquiring a serving metric for reception quality of a serving antenna and a candidate metric corresponding to a candidate antenna for a measurement period, comparing a magnitude of the candidate metric with a magnitude of a sum of the serving metric and an offset, determining whether the counter is equal to a predetermined threshold based on the comparison, and selecting an antenna from among the serving antenna and the candidate antenna based on the determination.

According to another aspect of the inventive concept, there is provided an electronic device in a non-terrestrial network (NTN)-based communication system, the electronic device includes a plurality of antennas and a processor configured to set a counter to an initial value, acquire a serving metric for reception quality of a serving antenna and a candidate metric corresponding to a candidate antenna for a measurement period, compare a magnitude of the candidate metric with a magnitude of a sum of the serving metric and an offset, determine whether the counter is equal to a predetermined threshold based on the comparison, and select an antenna from among the serving antenna and the candidate antenna based on the determination.

At least some of the above and other features of the invention are set out in the claims.

### BRIEF DESCRIPTION OF THE DRAWINGS

Embodiments of the inventive concept will be more clearly understood from the following detailed description taken in conjunction with the accompanying drawings and the claims:
FIG. 1 is a block diagram illustrating an example of a non-terrestrial network according to an embodiment;
FIG. 2 is a block diagram of a base station according to an embodiment;
FIG. 3 is a block diagram of a user terminal according to an embodiment;
FIG. 4 shows a frame structure of NB-IoT;
FIG. 5 is a flowchart illustrating a method of operating a user terminal for selection of an optimal antenna, according to an embodiment;
FIG. 6 is a flowchart illustrating a method of operating a user terminal in a first operation mode, according to an embodiment;
FIG. 7 is a flowchart illustrating a method of operating a user terminal in a second operation mode, according to an embodiment;
FIG. 8 is a flowchart illustrating a method of operating a user terminal during an initial connection, according to an embodiment;
FIG. 9A is a flowchart illustrating a method of operating a user terminal when a state of connection is RRC_CONNECTED, according to an embodiment;
FIG. 9B is a table illustrating a combination of reception signals of a serving antenna and a candidate antenna, according to an embodiment;
FIG. 10 is a flowchart illustrating a method of operating a user terminal when a state of connection is RRC_IDLE, according to an embodiment;
FIG. 11 is a flowchart illustrating a method of operating a user terminal to increase a measurement period, according to an embodiment; and
FIG. 12 is a flowchart illustrating a method of operating a user terminal, according to an embodiment.

### DETAILED DESCRIPTION OF THE EMBODIMENTS

The inventive concept provides an electronic device and operating method thereof in a non-terrestrial network-based communication system. One or more embodiments of the present disclosure include a communication system configured to perform quality measurement of a plurality of candidate antennas while maintaining reception performance of a serving antenna. According to an embodiment, a candidate antenna of the plurality of candidate antennas may be changed to a serving antenna while accommodating a limited number of antennas. In some cases, embodiments may include algorithms and data analysis to dynamically identify and utilize the optimal antenna configuration. Therefore, in addition to selecting a serving antenna, embodiments may reselect antennas based on continuous monitoring of the signal quality of each of the plurality of candidate antennas.

Existing systems for selecting an antenna in a multi-antenna system are not able to operate in a non-terrestrial network-based communication system. That is, existing systems do not provide a method of selecting at least one antenna among multiple antennas in a non-terrestrial network-based communication system. Moreover, conventional antenna selection systems suffer from limitations in adaptability and real-time optimization. Such methods lack the sophistication to dynamically adjust antenna configurations in response to changing environmental conditions prevalent in communication networks, for example, signal quality may vary due to causes such as user movement of the user terminal, hand grip, etc. Accordingly, performing communication using only the selected antenna may cause suboptimal connectivity, increased susceptibility to signal interference, and reduced overall performance.

In some cases, satellite communication systems are studied and developed to overcome the limitations of connectivity and coverage of existing terrestrial networks using a next-generation mobile communication system. Accordingly, satellite communication systems may be able to provide users with low-capacity data, as well as voice and video streaming services or the like through satellites in areas where it is difficult to provide services with existing terrestrial networks.

Satellite communication systems may prefer to use some antennas, that is, a small number of antennas (i.e., instead of using all of a plurality of the antennas provided in a user terminal) to secure long battery life in an emergency situation. Therefore, in order to ensure the performance of a satellite communication system based on a small number of antennas, it may be useful to dynamically identify and select an antenna of a plurality of antennas of a user terminal that may perform communication with satellites.

One or more embodiments of the disclosure include a candidate antenna that is changed to a new serving antenna when the magnitude of a quality metric of a candidate antenna is greater than a value obtained by adding an offset value to a quality metric of a serving antenna. In some examples, a method of measuring a metric of a candidate antenna may be divided into a first method and a second method. According to an embodiment, the first method may be used for measuring a metric by disconnecting a connection with a serving antenna and connecting a candidate antenna. According to another embodiment, the second method may be used for measuring a metric by maintaining a connection with a serving antenna and additionally connecting a candidate antenna.

In case of the first method, the connection states may be divided into an initial access state, a connected state, and an idle state. For an initial access state, metrics of candidate antennas are measured in any one of narrowband primary synchronization signal (NPSS) detection, narrowband secondary synchronization signal (NSSS) detection, or narrowband physical broadcast channel (NPBCH) decoding. For example, the metric of each of the candidate antennas may be measured during the NPSS detection process. In the case of the connected state, the metric of the candidate antenna may be measured in the remaining section of the downlink frame except for the data section. Additionally or alternatively, in the case of idle state, cell reselection may occur depending on whether NPSS or NSSS is detected, so in case the best cell identifier (cell ID) is the same, connection to the previous serving cell is performed, and in case the best cell ID is different, cell reselection is performed.

In case of the second method, it may be possible to maintain the connection of the serving antenna, thereby measuring metrics of the serving antenna and the candidate antenna simultaneously in any section of the downlink frame. In such a case, when the metric of the serving antenna exceeds a threshold value, power consumption may be reduced by increasing a duration of a measurement period.

Accordingly, embodiments of the disclosure include a system for antenna selection within electronic devices operating in non-terrestrial network-based communication systems. Additionally, embodiments leverage adaptive algorithms and real-time data analysis to dynamically identify and utilize the optimal antenna configuration for seamless and reliable connectivity. Therefore, in addition to the selection of serving antennas, the present disclosure describes technology for selecting antennas again if required based on continuously monitoring the signal quality of other candidate antennas while transmitting and receiving data to and from the serving antenna.

Embodiments of the present disclosure include an operating method of an electronic device having a plurality of antennas in a non-terrestrial network (NTN)-based communication system. In some cases, the method includes setting a counter to an initial value followed by acquiring a serving metric for reception quality of a serving antenna and a candidate metric corresponding to a candidate antenna for a measurement period. In some cases, the electronic device compares a magnitude of the candidate metric with a magnitude of a sum of the serving metric and an offset followed by determining whether the counter is equal to a predetermined threshold and selecting an antenna from among the serving antenna and the candidate antenna based on the determination.

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. The features described herein may be embodied in different forms and are not to be construed as being limited to the example embodiments described herein. Rather, the example embodiments described herein have been provided merely to illustrate some of the many possible ways of implementing the methods, apparatuses, and/or systems described herein that will be apparent after an understanding of the disclosure of this application.

The present disclosure may be modified in multiple alternate forms, and thus specific embodiments will be exemplified in the drawings and described in detail. In the present specification, when a component (or a region, a layer, a portion, etc.) is referred to as being "on," "connected to," or "coupled to" another component, it means that the component may be directly disposed on/connected to/coupled to the other component, or that a third component may be disposed therebetween.

Like reference numerals may refer to like components throughout the specification and the drawings. It is noted that while the drawings are intended to illustrate actual relative dimensions of a particular embodiment of the specification, the present disclosure is not necessarily limited to the embodiments shown. The term "and/or" includes all combinations of one or more of which associated configurations may define.

It will be understood that, although the terms "first," "second," etc. may be used herein to describe various components, these components should not necessarily be limited by these terms. These terms are only used to distinguish one component from another. For example, a first component could be termed a second component, and, similarly, a second component could be termed a first component, without departing from the scope of the inventive concept. The terms of a singular form may include plural forms unless the context clearly indicates otherwise.

Additionally, terms such as "below," "under," "on," and "above" may be used to describe the relationship between components illustrated in the figures. The terms are used as a relative concept and are described with reference to the direction indicated in the drawings. It should be understood that the terms "comprise," "include," or "have" are intended to specify the presence of stated features, integers, steps, operations, components, parts, or combinations thereof in the disclosure, but do not preclude the presence or addition of one or more other features, integers, steps, operations, components, parts, or combinations thereof.

In the present specification, although terms such as first and second are used to describe various elements or components, it goes without saying that these elements or components are not limited by these terms. These terms are only used to distinguish a single element or component from other elements or components. Therefore, it goes without saying that a first element or component referred to below may be a second element or component within the technical idea of the present invention.

Hereinafter, a method for antenna selection within electronic devices operating in non-terrestrial network-based communication systems of the embodiments of the present disclosure will be described in detail with reference to the accompanying drawings.

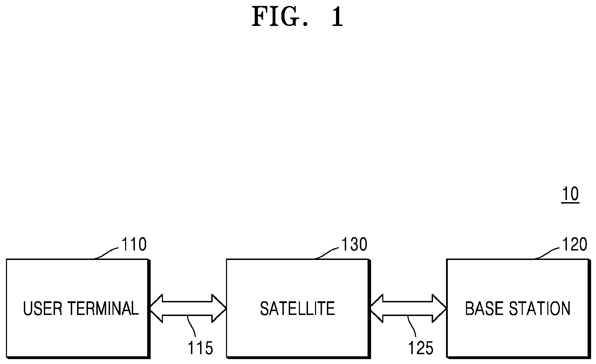

FIG. 1 is a block diagram illustrating an example of a non-terrestrial network 10 according to an embodiment.

Referring to FIG. 1, a non-terrestrial network 10 may include a user terminal 110, a base station 120, and a satellite 130.

The user terminal 110 is a device used by a user and may communicate with the base station 120 through a wireless channel. The user terminal 110 may be replaced with user equipment (UE), a mobile station, a subscriber station, customer premises equipment (CPE), a remote terminal, a wireless terminal, a user device, in addition to the terminal, or other terms having the same technical meaning as the user terminal. According to an embodiment, the user terminal 110 may establish a first link 115. For example, the user terminal 110 may form a link with the satellite 130. The first link 115 between the user terminal 110 and the satellite 130 may be referred to as a service link.

The base station 120 is a network infrastructure that provides wireless access to the user terminal 110. The base station 120 may have coverage defined as a certain geographic area based on a distance at which a signal may be transmitted. Referring to FIG. 1, the user terminal 110 may be located outside the coverage of the base station 120 because the user terminal 110 is located at a distance farther than a distance at which the base station 120 may directly transmit a signal. The base station 120 may be replaced with an access point (AP), eNodeB (eNB), a 5th generation (5G) node, a wireless point, in addition to the base station or other terms having the same technical meaning as the base station.

The base station 120 may be connected to one or more transmission/reception points (TRP) through a second link 125. For example, the TRPs may correspond to the satellite 130. The base station 120 may transmit a downlink signal to the user terminal 110 or receive an uplink signal from the user terminal 110 through the satellite 130. The connection between the base station 120 and the satellite 130 may correspond to a second link 125. The second link 125 may be referred to as a feeder link.

The satellite 130 may relay communication between the base station 120 and the user terminal 110. For example, the satellite 130 may receive data from the base station 120 through the second link 125 and transmit a downlink signal to the user terminal 110 through the first link 115.

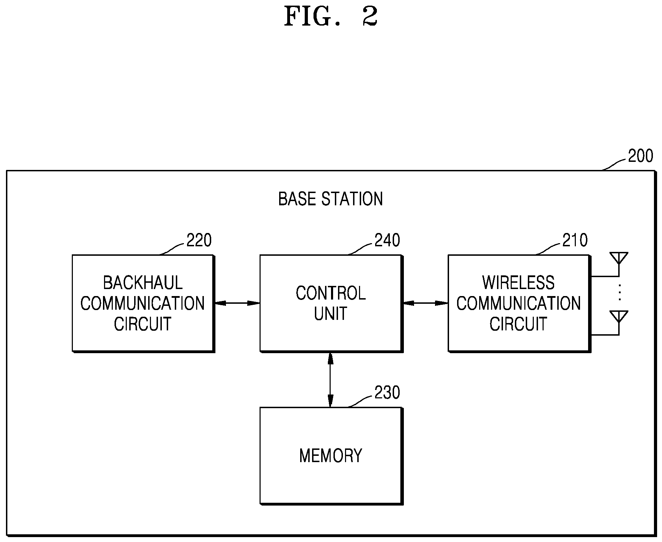

FIG. 2 is a block diagram of a base station 200 according to an embodiment.

Referring to FIG. 2, a base station 200 may include a wireless communication circuit 210, a backhaul communication circuit 220, a memory 230, and a control circuit 240. The base station 200 of FIG. 2 may correspond to the base station 120 of FIG. 1.

The wireless communication circuit 210 may perform functions such as transmitting and receiving signals through a wireless channel. According to an embodiment, the wireless communication circuit 210 may perform a conversion function between a baseband signal and a bit stream according to a physical layer standard of a system. For example, when transmitting data, the wireless communication circuit 210 may generate complex symbols by encoding and modulating a transmission bit string, and when receiving data, a reception bit string may be restored by demodulating and decoding the baseband signal. In addition, the wireless communication circuit 210 may up-convert the baseband signal into a radio frequency (RF) band signal and then transmit it through an antenna, or down-convert the RF band signal received through an antenna into a baseband signal. Thus, the wireless communication circuit 210 may include a transmission filter, a reception filter, an amplifier, a mixer, an oscillator, a digital to analog converter (DAC), an analog to digital converter (ADC), and the like.

The wireless communication circuit 210 may transmit and receive signals. For example, the wireless communication circuit 210 may transmit synchronization signals, reference signals, system information, messages, control information, data, or the like. In addition, the wireless communication circuit 210 may perform beamforming. Beamforming refers to a signal processing technique used in wireless communication systems to enhance the directionality and efficiency of transmitted or received signals. This technology utilizes arrays of antennas to focus the signal energy towards a specific direction or location, improving signal strength, reducing interference, and optimizing communication reliability in various applications, including wireless networks, radar, and acoustic systems.

The wireless communication circuit 210 may apply a beamforming weight to a signal to give directionality to the signal to be transmitted or received. The wireless communication circuit 210 may change the formed beam and repeatedly transmit the signal. For example, the wireless communication circuit 210 may transmit and receive a signal to and from the satellite 130 of FIG. 1 via the plurality of antennas.

The backhaul communication circuit 220 may provide an interface for performing communication with other nodes in the network. That is, the backhaul communication circuit 220 may convert a bit string, which is transmitted from the base station 200 to another node, for example, another access node, another base station, an upper node, a core network, or the like, into a physical signal and convert a physical signal received from another node into a bit string.

The memory 230 may store data such as a basic program, an application program, and setting information for the operation of the base station 200. The memory 230 may be configured as a volatile memory, a nonvolatile memory, or a combination of the volatile memory and the nonvolatile memory. For example, the nonvolatile memory may include read only memory (ROM), programmable ROM (PROM), erasable PROM (EPROM), electrically erasable PROM (EEPROM), flash memory, programmable random access memory (PRAM), magnetoresistive RAM (MRAM), resistive RAM (RRAM), etc. and the volatile memory may include dynamic RAM (DRAM), static RAM (SRAM), synchronous dynamic RAM (SDRAM), PRAM, MRAM, RRAM, etc.

The control unit 240 may control overall operations of the base station 200. For example, the control unit 240 may transmit and receive signals through the wireless communication circuit 210 or the backhaul communication circuit 220. In addition, the control unit 240 may write and read data to and from the memory 230. Accordingly, the control circuit 240 may include at least one processor.

A processor is an intelligent hardware device, such as a general-purpose processing component, a digital signal processor (DSP), a central processing unit (CPU), a graphics processing unit (GPU), a microcontroller, an application specific integrated circuit (ASIC), a field programmable gate array (FPGA), a programmable logic device, a discrete gate or transistor logic component, a discrete hardware component, or any combination thereof. In some cases, processor unit is configured to operate a memory array using a memory controller. In other cases, a memory controller is integrated into processor unit. In some cases, processor unit is configured to execute computer-readable instructions stored in memory unit to perform various functions. In some aspects, processor unit includes special purpose components for modem processing, baseband processing, digital signal processing, or transmission processing.

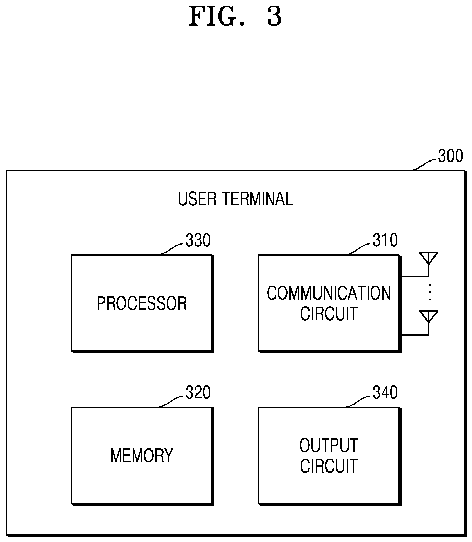

FIG. 3 is a block diagram of a user terminal 300 according to an embodiment.

Referring to FIG. 3, the user terminal 300 may include a communication circuit 310, a memory 320, a processor 330, and an output circuit 340. The user terminal 300 may correspond to the user terminal 110 of FIG. 1.

The communication circuit 310 performs functions for transmitting and receiving signals through a wireless channel. For example, the communication circuit 310 performs a conversion function between a baseband signal and a bit stream according to a physical layer standard of a system. For example, when transmitting data, the communication circuit 310 may generate complex symbols by encoding and modulating a transmission bit string. Similarly, when receiving data, the communication circuit 310 may restore a reception bit string by demodulating and decoding the baseband signal. In addition, the communication circuit 310 may up-convert the baseband signal into an RF band signal and then transmit the same through an antenna or down-convert the RF band signal received through an antenna into a baseband signal. For example, the communication circuit 310 may include a transmission filter, a reception filter, an amplifier, a mixer, an oscillator, a DAC, an ADC, and the like. The communication circuit 310 may perform beamforming. The communication circuit 310 may apply a beamforming weight to a signal to give directionality to the signal to be transmitted or received.

The communication circuit 310 may transmit and receive signals to and from the outside. The communication circuit 310 may receive a downlink signal. The downlink signal may include a synchronization signal (SS), a reference signal (RS), system information, a configuration message, control information, downlink data, or the like.

According to an embodiment, the communication circuit 310 may include a plurality of antennas. For example, in a non-terrestrial network, the user terminal 300 may perform communication using only some of a plurality of antennas to secure a relatively long battery time. In such cases, an antenna connected to the satellite 130 to transmit and receive signals may be referred to as a serving antenna and the remaining antennas (i.e., except the serving antenna) among the plurality of antennas may be referred to as candidate antennas.

The memory 320 may store data such as a basic program, an application program, and setting information for the operation of the user terminal 300. The memory 320 may be configured as a volatile memory, a nonvolatile memory, or a combination of the volatile memory and the nonvolatile memory. In addition, the memory 320 may provide stored data according to a request of the processor 330.

The processor 330 may control the overall operations of the user terminal 300. For example, the processor 330 may transmit and receive signals to and from the outside through the communication circuit 310. In addition, the processor 330 may write and read data to and from the memory 320. Thus, the processor 330 may include at least one processor or microprocessor, or may be part of a processor. When the processor 330 is part of a processor, a part of the communication circuit 310 and the processor 330 may be referred to as a communication processor (CP).

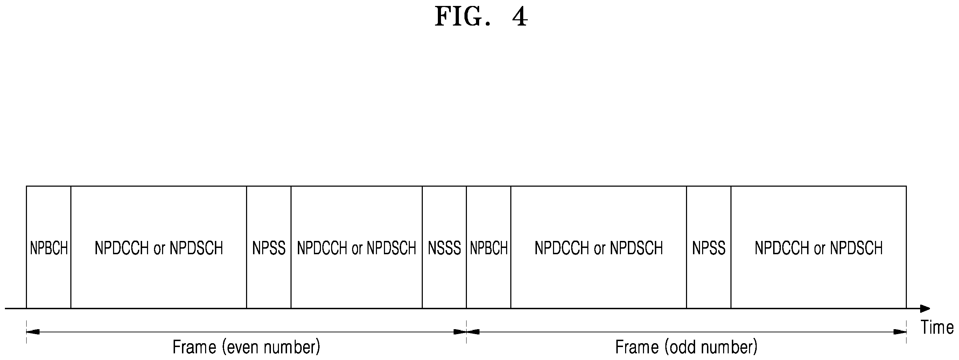

FIG. 4 shows a frame structure of NB-IoT. NB-IoT or Narrowband Internet of Things, represents a low-power, wide-area (LPWA) cellular technology optimized for the IoT ecosystem. It operates within licensed spectrum bands, facilitating extended coverage and enhanced penetration capabilities. NB-IoT caters to the connectivity needs of multiple IoT devices, prioritizing long battery life and efficient, reliable communication.

Referring to FIG. 4, an even frame and an odd frame may be alternately repeated. According to an example, each frame may be divided into 10 subframes. A Narrowband Physical Broadcast Channel (NPBCH) may be repeatedly transmitted every 10th subframe. For example, the NPBCH may be transmitted in the first subframe of each frame. That is, NPBCH may be transmitted in the 0th subframe (or subframe #0) of the even frame and the 0th subframe (or subframe #10) of the odd frame. A narrowband primary synchronization signal (NPSS) may be repeatedly transmitted every 10th subframe. For example, the NPSS may be transmitted in the 6th subframe of each frame. The NPSS may be transmitted in the 6th subframe (or subframe #5) of the even frame and the 6th subframe (or subframe #15) of the odd frame. A narrowband secondary synchronization signal (NSSS) may be repeatedly transmitted every 20th subframe. For example, the NSSS may be transmitted every two frames. The NSSS may be transmitted in the 10th subframe (subframe #9) of the even frame. The NPBCH transmitted regardless of a target device may correspond to a broadcast channel. A narrowband physical downlink control channel (NPDCCH) and a narrowband physical downlink shared channel (NPDSCH) transmitted to the target device as a destination may correspond to a unicast channel. The NPDCCH may be a channel responsible for carrying downlink control information. The NPDSCH may be a channel utilized to transfer unicast data downlink.

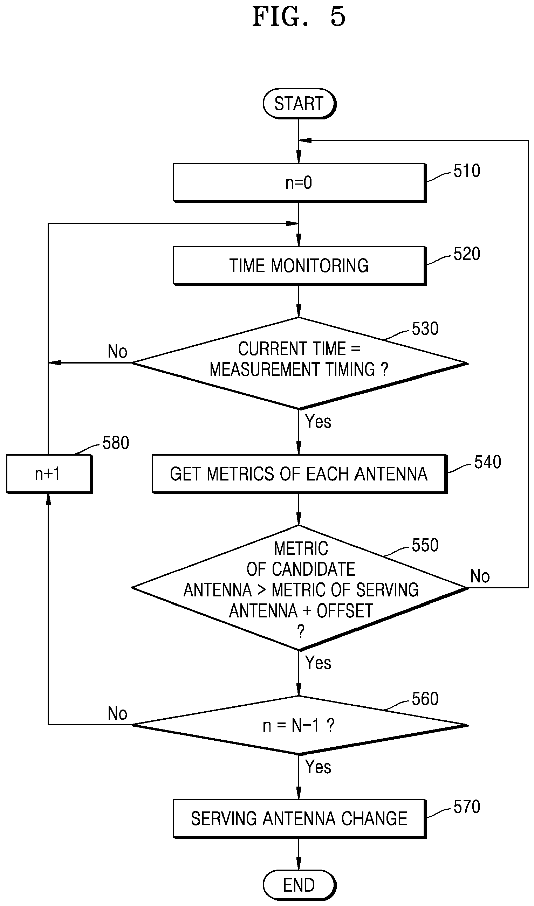

FIG. 5 is a flowchart illustrating a method of operating a user terminal 300 for selection of an optimal antenna according to an embodiment.

Referring to FIG. 5, in operation 510, the user terminal 300 may set n to 0. Here, n is a counter for instances where the quality measurement result of the serving antenna is less (e.g., worse) than the quality measurement results of the candidate antennas. That is, the value of n may refer to a counter representing a number times (e.g. a number of consecutive times) when the quality measurement result of the serving antenna is determined to be lower than the quality measurement results of the candidate antennas (e.g. by more than the offset value).

In operation 520, the user terminal 300 may perform time monitoring. The time monitoring process determines whether the quality measurement is to be performed.

In operation 530, the user terminal 300 may determine whether a current time is the same as a measurement timing. When the current time matches the measurement timing, the user terminal 300 may measure the quality of each of a plurality of antennas (i.e. the method may proceed to operation 540). When the current time does not match the measurement timing, the user terminal 300 may return to operation 520 and perform time monitoring until the current time matches the measurement timing.

In operation 540, the user terminal 300 may acquire a metric of each of the plurality of antennas. The metric may correspond to an index for measuring quality of a signal received by each antenna. For example, the metric may include one or more of: a narrowband reference signal received power (NRSRP), a narrowband reference signal received quality (NRSRQ), a signal to noise ratio (SINR), a narrowband received signal strength indicator (NRSSI), a correlation value, a gain index of automatic gain control (AGC), and a result of decoding a narrowband physical broadcast channel (NPBCH).

In some cases, NRSRP measures the received power of the reference signal from a specific cell in the network. It indicates the strength of the signal received by the device from the serving cell. The NRSRQ assesses the quality of the received signal. It is a composite metric that takes into account both the received power of the reference signal and the interference level and noise in the received signal. NRSSI provides a quantitative assessment of the strength of the received signal, indicating the power level of the received radio frequency signal in a specific narrowband. The user terminal 300 may acquire a first metric of the serving antenna and acquire second metrics of the candidate antennas.

In operation 550, the user terminal 300 may determine whether the magnitude of the candidate metric exceeds the magnitude of a sum of the serving metric and an offset. The candidate metric may correspond to a metric having the greatest value among the second metrics of the candidate antennas acquired in operation 540. The serving metric may correspond to the first metric of the serving antenna. The offset may correspond to a correction value for preventing the user terminal 300 from determining that the reception quality of the candidate antenna is higher than that of the serving antenna in case of temporary improvement of the reception channel of the candidate antennas and/ or temporary deterioration of the reception channel of the serving antenna. The offset may be variably set.

According to an embodiment, the user terminal 300 may return to operation 510 when the magnitude of the candidate metric is not greater than (i.e. is less than or equal to) the magnitude of the sum of the serving metric and the offset. That is, when the magnitude of the sum of the serving metric and the offset is greater than or equal to that of the candidate metric, n may be initialized back to 0. Accordingly, it is possible to prevent the serving antenna from being immediately changed based on an incorrect measurement of the candidate antenna as having a higher quality.

When the magnitude of the candidate metric is greater than the sum of the serving metric and the offset, the method may proceed to operation 560. In operation 560, the user terminal 300 may identify whether the value of n has reached a predefined level (in this case, N-1). Here, N may correspond to a threshold value for changing the serving antenna. For example, in operation 550, only in case when the magnitude of the candidate metric exceeding the magnitude of the sum of the offset and the serving metric is continuously detected N times, the user terminal 300 may proceed to operation S570 to change the current serving antenna to a candidate antenna corresponding to the candidate metric. When the value of n does not reach N-1 in operation 560, the magnitude of n may be incremented by 1 and returned to operation 520 to repeat operations 520 to 560.

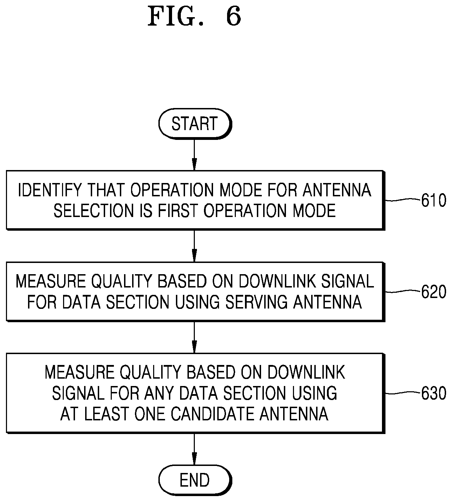

FIG. 6 is a flowchart illustrating a method of operating a user terminal 300 in a first operation mode according to an embodiment. Operations 610 to 630 are detailed flowcharts that may correspond to operation 540 of FIG. 5.

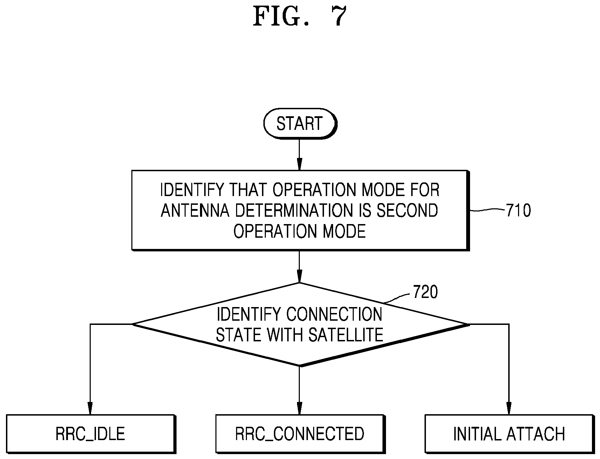

Referring to FIG. 6, in operation 610, the user terminal 300 may identify that an operation mode for selecting an antenna is a first operation mode. However, embodiments are not limited thereto, i.e., in some cases, user terminal may identify that an operation mode for selecting an antenna is a second operation mode (details regarding the second mode are provided with reference to FIG. 7). The operation modes may be based on whether the serving antenna is disconnected or connected while performing quality measurement of the candidate antennas.

For example, the user terminal 300 may perform optimal antenna selection in the first operation mode and the first operation mode may be a mode in which quality measurement of the candidate antennas is performed while maintaining connection with the serving antenna. In another example, the user terminal 300 may perform optimal antenna selection in a second operation mode and the second operation mode may be a mode in which quality measurement of the candidate antennas is performed while releasing connection with the serving antenna. In the present example, the user terminal 300 identifies that the operation mode for antenna selection is the first operation mode.

In operation 620, the user terminal 300 may receive a downlink signal during a data section using a serving antenna. In some cases, measuring quality using the downlink signal for the data section involves assessing the quality of the received signal specifically in the direction from the cell tower (base station) to the user device. The downlink direction may be from base station 120 to satellite 130, and from satellite 130 to user terminal 110. For example, referring together with FIG. 4, the user terminal 300 may receive an NPDCCH or an NPDSCH in every frame. The user terminal 300 may receive an NPDCCH or NPDSCH in every frame and calculate a serving metric by performing quality measurement based on the received NPDCCH or NPDSCH.

In operation 630, the user terminal 300 may perform quality measurement based on a downlink signal for an arbitrary section using at least one candidate antenna. The user terminal 300 may perform quality measurement based on the downlink signal during the data section of each frame, i.e., measuring the quality of this downlink signal for the data section involves evaluating parameters such as signal strength, SNR, error, etc. related to the received signal. Additionally or alternatively, user terminal 300 may perform quality measurement based on the synchronization signal received in the remaining section (e.g., at least one of NPSS, NSSS, and NPBCH) so as not to overlap with the data section of the serving antenna.

FIG. 7 is a flowchart illustrating a method of operating a user terminal 300 in a second operation mode according to an embodiment.

Referring to FIG. 7, in operation 710, the user terminal 300 may identify that an operation mode for selecting an antenna is a second operation mode. The second operation mode may be a mode in which the connection with the serving antenna is released and the quality measurement of the candidate antennas is performed.

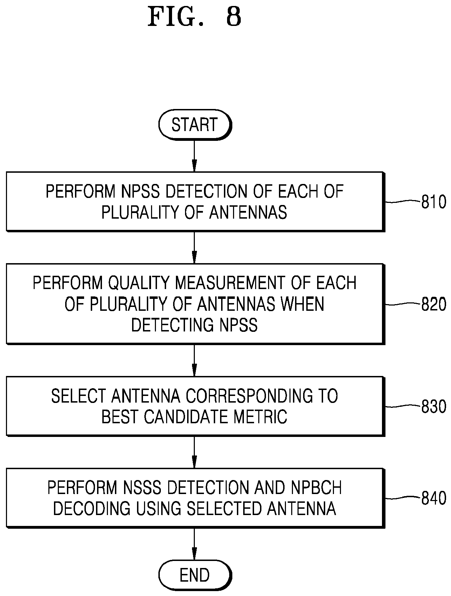

In operation 720, the user terminal 300 may identify a state of connection with the satellite 130 of FIG. 1. For example, the user terminal 300 may be in a state of connection before establishing a link with a satellite (as described with reference to Fig. 1). In this case, the user terminal 300 performs an initial attach based on one of a plurality of antennas and a detailed description of performing the initial attach is provided in FIG. 8. In another example, a state of connection between the user terminal 300 and the satellite may be given as RRC_CONNECTED.

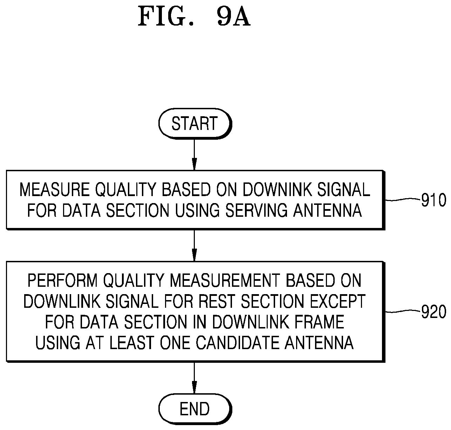

For example, the user terminal 300 may establish a link with the satellite by performing an initial attach. That is, the user terminal 300 is in an RRC-connected state (RRC_CONNECTED) with the satellite and the serving antenna may transmit and receive signals to and from the satellite. The detailed description of the case where the connection state of the user terminal 300 corresponds to RRC_CONNECTED state is provided with reference to FIG. 9A.

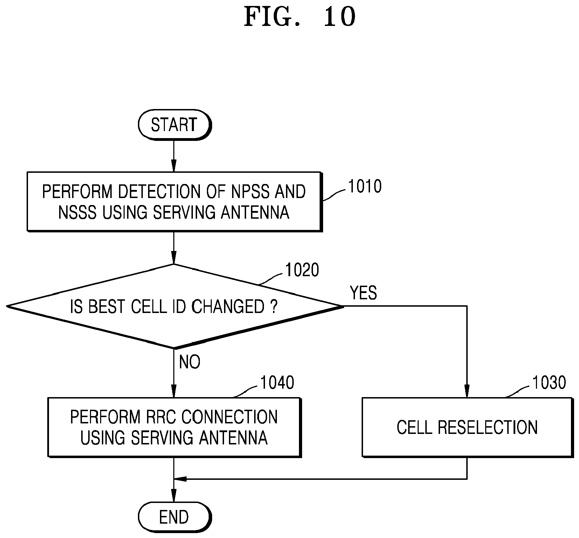

In another example, a state of connection between the user terminal 300 and the satellite may be RRC_IDLE. For example, the user terminal 300 may enter in a sleep mode after establishing a link with the satellite. In this case, the RRC_CONNECTED connection may be released. The detailed description of the case where the connection state of the user terminal 300 corresponds to RRC_IDLE is provided with reference to FIG. 10.

FIG. 8 is a flowchart illustrating a method of operating a user terminal 300 during an initial connection according to an embodiment of the present disclosure.

Referring to FIG. 8, in operation 810, the user terminal 300 may perform NPSS detection of each of a plurality of antennas. Since the time point of operation 810 is before the initial attach with the satellite is performed, the serving antenna among the plurality of antennas may correspond to a state not specified separately. The user terminal 300 may receive an NPSS arranged in the frame (e.g., in the middle of each frame) through each of the plurality of antennas and perform timing synchronization based on the received NPSS.

In operation 820, when detecting the NPSS, the user terminal 300 may measure the quality of each of the plurality of antennas. For example, the user terminal 300 may receive the NPSS through each of the plurality of antennas and measure the received power. The user terminal 300 may acquire a metric of an NRSRP value for each of the plurality of antennas. For example, the user terminal 300 may acquire a first candidate metric for a first antenna among the plurality of antennas and may acquire a second candidate metric for a second antenna among the plurality of antennas.

According to an embodiment, only the case where the metric is the NRSRP has been described. However, embodiments are not limited thereto. According to various embodiments, the user terminal 300 may calculate any one metric (or a combination thereof) of Narrowband Reference Signal Received Quality (NRSRQ), Signal to Interference and Noise Ratio (SINR), Narrowband Received Signal Strength Indicator (NRSSI), correlation value, and/ or a gain index of Auto Gain Control (AGC) for each of the plurality of antennas.

In operation 830, the user terminal 300 may select an antenna corresponding to the best candidate metric. The best candidate metric may be the metric that indicates the strongest or highest quality signal or connection. Determination of the best candidate metric may refer to the identification of the most suitable or antenna for a particular device to utilize at a given time based on the candidate metrics of the antennas. The best candidate metric may indicate a candidate antenna that provides the best overall performance (i.e., in terms of signal strength, and/or quality). For example, the user terminal 300 may measure a first Reference Signal Received Power (RSRP) for the NPSS using the first antenna among the plurality of antennas and measure a second RSRP for the NPSS using a second antenna. The user terminal 300 may identify a RSRP having a greater magnitude between the first RSRP and the second RSRP since RSRP indicates that more power is received with increase in magnitude. For example, when the magnitude of the first RSRP is greater than the magnitude of the second RSRP, the user terminal 300 may identify the first RSRP as the best candidate metric. For example, the user terminal 300 may select a first antenna, which is an antenna corresponding to the first RSRP identified as the best candidate metric, as a serving antenna.

In operation 840, the user terminal 300 may perform NSSS detection and NPBCH decoding using the selected antenna. For example, the user terminal 300 may select the first antenna as the serving antenna and receive the NSSS using the first antenna. The user terminal 300 may identify a cell ID based on the received NSSS. The user terminal 300 may perform an initial attach by receiving the NPBCH using the first antenna and decode the NPBCH to acquire a master information block (MIB). Accordingly, when performing the initial attach, the user terminal 300 receives the NPSS using all of the plurality of antennas, acquires a metric, and selects an antenna corresponding to the best metric as the serving antenna. However, embodiments are not limited thereto.

The process of receiving the NPSS and finding the synchronization timing may take a significant amount of time because it is based on blind decoding. Blind decoding refers to a method in wireless communication where a receiver deciphers transmitted data without prior knowledge of the signal's parameters. This technique does not rely on known synchronization or pilot signals, enabling the receiver to detect and extract information from the received signal even in challenging or noisy environments. It is particularly used for enhancing signal recovery and decoding efficiency in various wireless communication systems, improving overall reliability and data throughput.

Therefore, according to various embodiments, the user terminal 300 may obtain the synchronization timing based on receiving the NPSS using a pre-designated antenna even while performing the initial attach. For example, the user terminal 300 may identify physical characteristics of each of the plurality of antennas while being connected to a terrestrial network (TN) - based communication system. In case of the user terminal 300 performing a non-terrestrial network (NTN)-based communication by sharing an RF front end with a TN-based communication system, an antenna having the best identified physical characteristic is selected while being connected to the TN-based communication system and the NPSS may be received through the corresponding antenna to obtain synchronization timing.

Thereafter, the user terminal 300 may receive the NSSS using the antenna receiving the NPSS and measure a serving metric. The user terminal 300 may receive the NSSS using the remaining candidate antennas excluding the antenna having the best physical characteristic among the plurality of antennas and calculate a candidate metric for each of the candidate antennas. The user terminal 300 may choose to change the serving antenna by performing a comparison operation (e.g., in operation 550 of FIG. 5) between the candidate metrics of the candidate antennas and the serving metric of the antenna with the best physical characteristics.

According to various embodiments, the user terminal 300 may not identify the antenna having the highest physical characteristics while being connected to the TN-based communication system. In this case, the user terminal 300 may identify the antenna that last operated as the serving antenna using the history information on the serving antenna. The user terminal 300 may select the corresponding antenna as the serving antenna again to receive the NPSS.

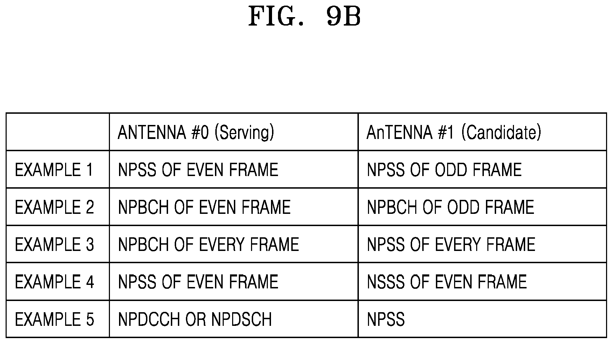

FIG. 9A is a flowchart illustrating a method of operating a user terminal 300 when a connection state is in a connected state (i.e., RRC_CONNECTED) according to an embodiment. FIG. 9B is a table illustrating a combination of reception signals of a serving antenna and a candidate antenna according to an embodiment.

Referring to FIG. 9A, in operation 910, the user terminal 300 may receive a downlink signal during a data section in a downlink frame using a serving antenna. For example, referring together with FIG. 4, the user terminal 300 may receive an NPDCCH or an NPDSCH in every frame. The user terminal 300 may receive an NPDCCH or NPDSCH in every frame and calculate a serving metric corresponding to the serving antenna by performing quality measurement based on the received NPDCCH or NPDSCH.

In operation 920, the user terminal 300 may perform quality measurement based on the downlink signal for the rest section of the downlink frame except for the data section using at least one candidate antenna. That is, the user terminal 300 may perform quality measurement on the downlink single using at least one candidate antenna for a section of the downlink frame other than the data section (the rest section, otherwise known as a remaining section). In some cases, the rest section of a downlink frame contains control information necessary for synchronization and framing. It includes synchronization signals, reference signals, and other control signals that facilitate the accurate reception and interpretation of the subsequent data section. The data section follows the rest section and carries the actual payload or information intended for the user devices. The data section comprises user data, such as text, images, or other content transmitted from the base station to the user equipment (UE). Since the user terminal 300 of FIG. 9A is identified to be in the second operation mode according to operation 710 of FIG. 7, at least one candidate antenna may not receive a signal simultaneously with the serving antenna. That is, by setting the section measuring the reception metric of at least one candidate antenna not to overlap the section where the serving antenna receives data, the optimal candidate antenna may be monitored while maintaining the data reception performance of the NTN-based communication system.

Referring to FIG. 9B, the table shows a combination of respective reception signals of a serving antenna and a candidate antenna. The user terminal 300 may perform quality measurement based on a downlink signal during a data section of each frame using a serving antenna and quality measurement may be performed based on a synchronization signal received in a remaining section (for example, at least one of NPSS, NSSS, and NPBCH) so as not to overlap the data section of the serving antenna.

For example, referring to Example 5 of FIG. 9B illustrates that a candidate antenna receives an NPSS, but the embodiments are not limited thereto. According to various embodiments, the candidate antenna may receive any one of NPSS, NSSS, and NPBCH and perform quality measurement based on the received result to calculate a candidate metric. In operation 910 of FIG. 9A, the serving antenna has been described to receive an NPDCCH or NPDSCH in a data section of a downlink frame, but the embodiments are not limited thereto.

According to various embodiments, it may be possible for the serving antenna and the candidate antenna to receive the same reception signal at different timings and compare the metrics. For example, referring to Example 1 of FIG. 9B, the user terminal 300 may receive the NPSS using the candidate antenna in the odd downlink frame and calculate the candidate metric for the NPSS in the odd downlink frame. The user terminal 300 may receive the NPSS using the serving antenna in the even downlink frame so as not to overlap the odd downlink frame, and calculate a serving metric for the NPSS in the even downlink frame.

In another example, referring to Example 2 in FIG. 9B, the user terminal 300 may receive the NPBCH using a candidate antenna in the odd downlink frame and calculate a candidate metric for the NPBCH in the odd downlink frame. The user terminal 300 may receive the NPBCH using the serving antenna in the even downlink frame so as not to overlap the odd downlink frame, and calculate a serving metric for the NPBCH in the even downlink frame. In operation 910 of FIG. 9A, the serving antenna has been described to receive an NPDCCH or NPDSCH in a data section of a downlink frame, but the embodiments are not limited thereto.

According to various embodiments, the serving antenna and the candidate antenna may receive different reception signals at different timings within the same frame to compare the metrics with each other. For example, referring to Example 3 of FIG. 9B, the user terminal 300 may receive the NPSS of each frame using a candidate antenna and calculate a candidate metric for the NPSS of each frame. The user terminal 300 may receive NPBCH received in a section that does not overlap the NPSS in each frame using a serving antenna and may calculate a serving metric for the NPBCH of each frame.

For example, referring to Example 4 in FIG. 9B, the user terminal 300 may receive the NSSS of the even frame using the candidate antenna and calculate a candidate metric for the NSSS of the even frame. The user terminal 300 may receive an NPSS received in a section that does not overlap the NSSS for each same even frame using a serving antenna and calculate a serving metric for the NPSS of the even frame.

FIG. 10 is a flowchart illustrating a method of operating a user terminal 300 when a connection state is RRC_IDLE, according to an embodiment.

Referring to FIG. 10, in operation 1010, the user terminal 300 may perform NPSS and NSSS detection using a serving antenna. That is, when the connection state is RRC_IDLE, the user terminal 300 may receive the NPSS to synchronize timing using the serving antenna before entering a sleep mode, and receive the NSSS to detect a cell ID.

In operation 1020, the user terminal 300 may determine whether the best cell ID is changed. In some cases, the best cell ID refers to the identification of the most suitable or optimal cell for a particular device to connect to at a given time. The device continuously evaluates neighboring cells and their respective signals to select the best cell ID for connectivity, thereby ensuring a stable and efficient connection by switching to the cell that provides the maximum overall performance (i.e., in terms of signal strength, quality, and resources).

Since the cell ID detected in operation 1010 is a best cell ID when the user terminal 300 exits the sleep mode, the user terminal 300 may compare whether the cell ID detected in operation 1010 matches the cell ID before entering the sleep mode. If the best cell ID has changed, then operation 1030 is performed. If the best cell has not changed ID has not changed, then operation 1040 is performed.

In operation 1030, the user terminal 300 may perform cell reselection. That is, since the best cell ID before the user terminal 300 enters the sleep mode and the best cell ID at the time of exiting the sleep mode are different from each other, cell reselection may be performed. When the user terminal 300 performs cell reselection, the reselection may be completed by performing operations 810 to 840 during the initial attach in accordance with FIG. 8.

In operation 1040, the user terminal 300 may perform an RRC connection using a serving antenna. In this case, the user terminal 300 may determine whether to change the serving antenna and perform the RRC connection. For example, the user terminal 300 may perform NPSS and NSSS detection using the serving antenna before entering the sleep mode in operation 1010, and acquire a serving metric corresponding to the serving antenna based on the NPSS and NSSS. The user terminal 300 may receive an NPSS and/or NSSS based on at least one of the antennas except for the serving antenna of operation 1010 among the plurality of antennas and measure a reception metric based on the received NPSS and/or NSSS. The user terminal 300 may acquire a candidate metric, which is a reception metric corresponding to the candidate antenna, and compare the candidate metric with the serving metric to determine whether to change the serving antenna. For example, the detailed description of comparing the candidate metric with the serving metric may be the same as that described in operation 550 of FIG. 5. Thus, (as described in detail in step 560 in FIG. 5), when the magnitude of the candidate metric continuously exceeds the magnitude of the sum of the serving metric and the offset N times (where N refers to a threshold value), the user terminal 300 may change the antenna corresponding to the candidate metric to a serving antenna to thereby perform the RRC connection.

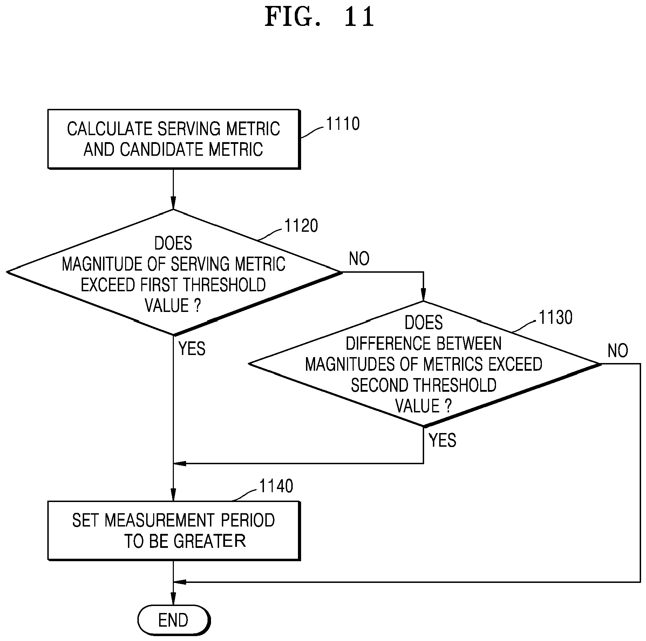

FIG. 11 is a flowchart illustrating a method of operating a user terminal 300 for increasing a measurement period according to an embodiment.

Referring to FIG. 11, in operation 1110, the user terminal 300 may calculate a serving metric and a candidate metric. The processes of acquiring a serving metric by measuring quality using a serving antenna and acquiring a candidate metric by measuring quality using at least one candidate antenna are same as those described with reference to FIGS. 1 to 10, and thus, redundant descriptions thereof are omitted.

In operation 1120, user terminal 300 may determine whether the magnitude of the serving metric exceeds a first threshold value. The first threshold value may refer to a value that determines whether the quality of communication using the serving antenna exceeds a certain level. The first threshold value may be variably set. When the magnitude of the serving metric exceeds the first threshold value, the communication quality with the satellite 130 using the serving antenna may be very high. When the magnitude of the serving metric exceeds the first threshold value, the user terminal 300 may not have to monitor the reception metric of at least one candidate antenna while consuming power because a pre-established RRC connection state is stable. Accordingly, the user terminal 300 may proceed to operation 1140 and increase the duration of the measurement period. For example, the user terminal may set the measurement period to be longer than originally or previously set.

When the magnitude of the serving metric does not exceed the first threshold value, operation 1030 may be performed. In operation 1130, the user terminal 300 may determine whether a difference between the metrics exceeds a second threshold value. If the difference between the magnitudes of metrics does exceed the second threshold value, then the user terminal 300 performs operation 1140 to increase the measurement period. If not, then operation 1140 is not performed (the method ends). Here, the difference between the magnitudes of the metrics may refer to a difference in a state in which the magnitude of the serving metric is greater than the magnitude of the candidate metric. This is because when the magnitude of the candidate metric is greater than that of the serving metric, the serving antenna should be changed to an antenna corresponding to the candidate metric (i.e., rather than increasing the measurement period in operation 1140). In operation 1130, the user terminal 300 may increase the measurement period by proceeding to operation 1140 even when the magnitude of the serving metric is not higher than the first threshold value but is relatively higher than the candidate metric.

Operation 1130 results in the measurement period being increased when the magnitude of the candidate metric is less than the magnitude of the serving metric by more than the second threshold. When the magnitude of the candidate metric is less than the magnitude of the serving metric by more than the second threshold, the quality measured using the candidate antenna may be seen to be relatively less (e.g., a poor quality) compared to the quality measured using the serving antenna. Therefore, unless the channel state changes rapidly, the current serving antenna is likely to be maintained, so the measurement period may be increased to reduce power consumption.

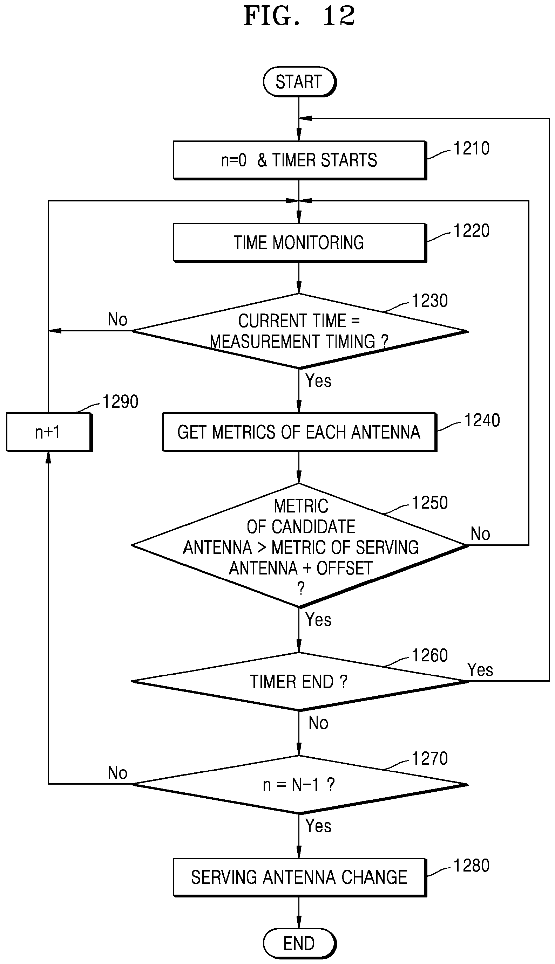

FIG. 12 is a flowchart illustrating a method of operating a user terminal 300 according to an embodiment.

Referring to FIG. 12, in operation 1210, the user terminal 300 may set n to 0 and may start a timer. The value of n refers to a counter representing a number times (e.g. a number of consecutive times) when the quality measurement result of the serving antenna is determined to be lower than the quality measurement results of the candidate antennas (e.g. by more than the offset value). The timer is used for measuring a predefined time.

In operation 1220, the user terminal 300 may perform time monitoring. In some cases, the time monitoring is used to determine whether it is time for the user terminal 300 to perform quality measurement.

In operation 1230, the user terminal 300 may determine whether a current time is the same as a measurement timing. When the current time matches the measurement timing, the user terminal 300 may measure the quality of each of a plurality of antennas. When the current time does not match the measurement timing, the user terminal 300 may return to operation 1220 and perform time monitoring until the current time matches the measurement timing.

In operation 1240, the user terminal 300 may acquire a metric of each of the plurality of antennas. The metric may correspond to an index for measuring quality of a signal received by each antenna. For example, the metric may include NRSRP, NRSRQ, SINR, NRSSI, a correlation value, a gain index of AGC, an NPBCH decoding result, and the like. The user terminal 300 may acquire a first metric of the serving antenna and acquire second metrics of the candidate antennas.

In operation 1250, the user terminal 300 may determine whether the magnitude of the candidate metric exceeds the magnitude of a sum of the serving metric and an offset. The candidate metric may correspond to a metric having the greatest value among the second metrics of the candidate antennas acquired in operation 1240. The serving metric may correspond to the first metric of the serving antenna. The offset may correspond to a correction value for preventing the user terminal 300 from determining that the reception quality of the candidate antenna is better than that of the serving antenna in the case of the temporary improvement of the reception channel of the candidate antennas and the temporary deterioration of the reception channel of the serving antenna. The offset may be variably set.

According to an embodiment, the user terminal 300 may return to operation 1220 when the magnitude of the candidate metric is not greater than (i.e. is less than or equal to) the magnitude of the sum of the serving metric and the offset. That is, referring to FIG. 5, if the magnitude of the candidate metric is not greater than (i.e. is less than or equal to) the magnitude of the sum of the serving metric and the offset in operation 550, n is initialized by returning to operation 510, but in the case of FIG. 12, only time monitoring may be performed by returning to operation 1220 (i.e., without initializing n). Therefore, the value of n may be acquired by accumulating and counting the case when the magnitude of the candidate metric is greater than the magnitude of the sum of the serving metric and the offset during the operation of the timer.

In operation 1260, the user terminal 300 may determine whether the timer is over. The timer is used to count the number of times the quality measurement of the candidate metric is higher than the quality measurement of the serving antenna for a predefined time. Accordingly, when the timer is completed (e.g. when the predefined time since the start of the timer has been reached), the user terminal 300 may return to operation 1210 to initialize a value of n setting the number of counts to 0 and restarting the timer. If the timer has not ended, then the user terminal 300 performs operation 1270.

In operation 1270, the user terminal 300 may identify whether the value of n has reached N-1. Here, N may correspond to a threshold count value for changing the serving antenna. For example, in operation 1250, only in case when the magnitude of the candidate metric exceeds the magnitude of the sum of the offset and the serving metric is detected N times during the operation of the timer, the user terminal 300 may proceed to operation 1280 to change the current serving antenna to a candidate antenna corresponding to the candidate metric. When the value of n does not reach N-1 in operation 1270, the magnitude of n may be increased by 1 (operation 1290) and returned to operation 1220 to repeat operations 1220 to 1260.

While the inventive concept has been particularly shown and described with reference to embodiments thereof, it will be understood that various changes in form and details may be made therein without departing from the scope of the following claims.

The processes discussed above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to represent example implementations and is not intended to be limiting. Only the claims that follow are meant to set bounds as to what the present invention includes. Furthermore, it should be noted that the features and limitations described in any one embodiment may be applied to any other embodiment herein, and flowcharts or examples relating to one embodiment may be combined with any other embodiment in a suitable manner, done in different orders, or done in parallel. In addition, the systems and methods described herein may be performed in real time. It should also be noted, the systems and/or methods described above may be applied to, or used in accordance with, other systems and/or methods.

## Claims

1. An operating method of an electronic device having a plurality of antennas in a non-terrestrial network-based communication system, the operating method comprising:
setting a counter to an initial value;
acquiring a serving metric for reception quality of a serving antenna and a candidate metric corresponding to a candidate antenna for a measurement period;
comparing a magnitude of the candidate metric with a magnitude of a sum of the serving metric and an offset;
determining whether the counter is equal to a predetermined threshold based on the comparison; and
selecting an antenna from among the serving antenna and the candidate antenna based on the determination.

2. The operating method of claim 1, further comprising:
initializing the counter when the magnitude of the candidate metric is less than the sum of the serving metric and the offset; and
incrementing the counter in response to the counter and the threshold not being equal.

3. The operating method of claim 1 or claim 2, wherein each of the candidate metric and the serving metric corresponds to at least one of a narrowband reference signal received power, a narrowband reference signal received quality, a signal to noise ratio, a narrowband received signal strength indicator, a correlation value, a gain index of automatic gain control, and a result of decoding a narrowband physical broadcast channel, NPBCH, and
wherein the acquiring of each of the serving metric and the candidate metric when the device is connected to a satellite further comprises:
receiving a narrowband physical downlink shared channel, NPDSCH or a narrowband physical downlink control channel, NPDCCH, in a downlink frame using the serving antenna;
performing quality measurement based on the NPDSCH or the NPDCCH; and
performing quality measurement based on a downlink signal of a remaining section using the candidate antenna, wherein the downlink signal of the remaining section includes at least one of a narrowband primary synchronization signal, a narrowband secondary synchronization signal, and the NPBCH.

4. The operating method of claim 1 or claim 2, wherein the acquiring of each of the serving metric and the candidate metric when in an idle state of connection to a satellite further comprises:
receiving a narrowband primary synchronization signal, NPSS, using the serving antenna;
synchronizing timing with the satellite based on the NPSS;
receiving a narrowband secondary synchronization signal, NSSS, using the serving antenna;
identifying a cell identifier, ID, based on the NSSS; and
determining whether the identified cell ID matches a cell ID before the electronic device enters a sleep mode, wherein the method further comprises, when the identified cell ID does not match the cell ID before entering the sleep mode:
performing cell reselection; and
performing a radio resource control, (RRC, connection using the serving antenna.

5. The operating method of claim 4, wherein the performing of the RRC connection using the serving antenna further comprises:
receiving the NPSS or the NSSS using the candidate antenna;
performing quality measurement based on the NPSS or the NSSS to acquire the candidate metric;
acquiring the serving metric based on the NPSS or NSSS received by the serving antenna;
comparing the serving metric with the candidate metric; and
determining selection of an antenna from among the serving antenna and the candidate antenna based on the comparison.

6. The operating method of any preceding claim, wherein the acquiring of each of the serving metric and the candidate metric when a state of connection to a satellite does not exist, further comprises:
receiving an NPSS using each of the plurality of antennas to synchronize timing with the satellite;
performing quality measurement of each of the plurality of antennas based on the NPSS;
identifying a metric of a largest value among a plurality of metrics corresponding to the plurality of antennas;
selecting an antenna corresponding to the identified metric as a serving antenna; and
receiving the NSSS and NPBCH using the selected serving antenna.

7. The operating method of any preceding claim, further comprising: increasing the measurement period when the magnitude of the serving metric exceeds a first threshold metric value, or the magnitude of the serving metric is less than the first threshold metric value, and a difference between the magnitudes of the serving metric and the candidate metric exceeds a second threshold metric value.

8. An electronic device in a non-terrestrial network based communication system, the electronic device comprising:
a plurality of antennas; and
a processor, the processor being configured to:
set a counter to an initial value;
acquire a serving metric for reception quality of a serving antenna and a candidate metric corresponding to a candidate antenna for a measurement period;
compare a magnitude of the candidate metric with a magnitude of a sum of the serving metric and an offset;
determine whether the counter is equal to a predetermined threshold based on the comparison; and
select an antenna from among the serving antenna and the candidate antenna based on the determination.

9. The electronic device of claim 8, wherein the processor is further configured to:
initialize the counter when the magnitude of the candidate metric is less than the magnitude of the sum of the serving metric and the offset, and
increment the counter in response to the counter and the threshold not being equal.

10. The electronic device of claim 8 or claim 9, wherein each of the candidate metric and the serving metric corresponds to at least one of a narrowband reference signal received power, a narrowband reference signal received quality, a signal to noise ratio, a narrowband received signal strength indicator, a correlation value, a gain index of automatic gain control, and a result of decoding a narrowband physical broadcast channel, NPBCH.

11. The electronic device of any of claims 8-10, wherein the processor is configured to:
receive a narrowband physical downlink shared channel, NPDSCH, or narrowband physical downlink control channel, NPDCCH, in a downlink frame using the serving antenna when the device is connected to a satellite;
perform quality measurement based on the NPDSCH or the NPDCCH; and
perform quality measurement based on a downlink signal of a remaining section using the candidate antenna, wherein the downlink signal of the remaining section includes at least one of NPSS, NSSS, and NPBCH.

12. The electronic device of any of claims 8-11, wherein the processor is configured to:
receive an NPSS using the serving antenna and synchronize timing with the satellite based on the NPSS when a state of connection with a satellite is idle;
receive an NSSS using the serving antenna and identify a cell ID based on the NSSS; and
determine whether the identified cell ID matches a cell ID before the electronic device enters a sleep mode, wherein when the identified cell ID does not match the cell ID before entering the sleep mode:
perform cell reselection; and
perform an RRC connection using the serving antenna.

13. The electronic device of claim 12, wherein the processor is configured to:
receive the NPSS or the NSSS using the candidate antenna;
perform quality measurement based on the NPSS or the NSSS to acquire the candidate metric;
acquire the serving metric based on the NPSS or NSSS received by the serving antenna;
compare the serving metric with the candidate metric; and
determine selection of an antenna from among the serving antenna and the candidate antenna based on the comparison.

14. The electronic device of any of claims 8-13, wherein, the processor is configured to, when a state of connection with a satellite does not exist:
receive an NPSS using each of the plurality of antennas to synchronize timing with the satellite;
perform quality measurement of each of the plurality of antennas based on the NPSS;
identify a metric of a largest value among a plurality of metrics corresponding to the plurality of antennas;
select an antenna corresponding to the identified metric as a serving antenna; and
receive an NSSS and an NPBCH using the selected serving antenna.

15. The electronic device of any of claims 8-14, wherein the processor is configured to increase the measurement period in response to the magnitude of the serving metric exceeding a first threshold metric value, or the magnitude of the serving metric being less than the first threshold metric value, and a difference between the magnitudes of the serving metric and the candidate metric exceeding a second threshold metric value.
